# DEMANDE DE BREVET EUROPEEN

(11) **EP 0 722 821 A1**
(43) Date de publication de la demande: **24.07.1996**
(21) Numéro de dépôt: 95402960.9
(22) Date de dépôt: 28.12.1995
(51) Int. Cl.: B29C 47/02, B60R 13/04

(54) **Perfectionnements apportés aux profilés en un matériau polymère, comportant une armature métallique**

(30) Priorité: 20.01.1995 FR 9500641
(71) Demandeur: ETABLISSEMENTS MESNEL SOCIETE ANONYME DITE :, F-92000 Nanterre (FR)
(72) Inventeur: Seillier, Philippe, F-27790 Rosay-sur-Lieure (FR); Timmerman, Patrick, F-27380 Vandrimare (FR); Vinceneux, Nicolas, F-76520 Franqueville-St-Pierre (FR)
(74) Mandataire: Jolly, Jean-Pierre

(57) **Abrégé**

Dans ce profilé, le matériau polymère (7) est séparé de façon étanche de l'armature métallique (5) en tout point de la surface externe de celle-ci par une barrière en un polymère adhésif thermoplastique (6), apte à assurer une bonne liaison entre l'armature et le matériau polymère (7), qui recouvre l'ensemble.

## Description

La présente invention concerne des perfectionnements apportés aux profilés en un matériau polymère, notamment en caoutchouc, comportant une armature métallique.

De tels profilés sont couramment utilisés dans l'industrie automobile, en particulier, comme éléments de protection, d'étanchéité ou tout simplement à caractère esthétique. L'armature métallique dont ils sont équipés vise à leur conférer les caractéristiques mécaniques désirées et, notamment, dans le cas d'éléments à section en U, destinées à coiffer des bords saillants d'un carrosserie d'automobile, à leur permettre de pincer fermement ces bords pour en rendre solidaire le profilé. Ces armatures peuvent être pleines ou ajourées. Le matériau polymère vulcanisable ou thermoplastique est en général extrudé sur l'armature enduite d'un adhésif polymère/métal, préalablement découpée à la largeur du profil désiré.

Les armatures métalliques de ces profilés sont habituellement en aluminium ou en acier et elles présentent l'inconvénient de subir une corrosion rapide, dans les conditions sévères d'utilisation de ces profilés, qui sont exposés durant toute leur durée de vie aux intempéries. Cette corrosion a pour effet l'apparition sur ces profilés d'une corrosion dite "blanche", par formation d'alumine, pour les armatures en aluminium, et de rouille, pour les armatures en acier.

En effet, les agents chimiques destinés à permettre la vulcanisation et la protection antivieillissement du caoutchouc dont est composé le profilé se décomposent au cours de cette vulcanisation en sels ou en composés électrolytes, lesquels, en présence d'humidité diffuse et des charges noires conductrices, engendrent une corrosion rapide de l'armature par effet galvanique et électrolytique.

De même, le matériau polymère qui peut constituer le profilé et qui contient des agents chimiques antivieillissement qui se décomposent au cours des transformations thermiques et des charges noires conductrices peut engendrer, par les mêmes phénomènes, les mêmes types de corrosion.

Dans la pratique, pour réaliser les armatures, on utilise des bobines de grande longueur (600 mètres) et d'une largeur comprise entre 1 et 2 mètres, que l'on revêt sur les deux faces de couches d'agents adhésifs (une couche d'un primaire et une couche d'un adhésif proprement dit), qui se présente sous la forme d'une laque, et l'on découpe ensuite ces bobines en bandes ayant la dimension transversale des armatures, celles-ci étant mises en forme au profil désiré au moyen de galets de formage, soit avant, soit après les opérations d'enduction avec l'adhésif.

Un inconvénient essentiel de ce procédé est que toutes les opérations de découpe des bandes ont pour effet de mettre à nu les arêtes vives de l'armature et, après gainage de celle-ci à l'aide de caoutchouc ou de matière polymère, c'est au niveau de ces parties revêtues d'adhésif qu'apparaissent rapidement des traces de corrosion. C'est ce qu'a établi la Demanderesse en effectuant des essais de corrosion accélérée en atmosphère de brouillard salin, dans les conditions des normes usuelles.

Pour remédier à ce grave inconvénient, la Demanderesse a établi qu'il suffit de modifier les phases du procédé usuel, c'est-à-dire de gainer l'armature d'une barrière adhésive protectrice seulement après mise à la largeur désirée de l'armature du profilé. Ceci évite la mise à nu ultérieure d'arêtes vives de l'armature, en contact direct avec le caoutchouc ou la matière plastique, comme avec la technique usuelle.

L'invention a par conséquent pour objet un profilé en un matériau polymère, vulcanisable ou thermoplastique, à armature métallique, à résistance à la corrosion améliorée, le matériau polymère étant séparé de façon étanche de l'armature métallique, en tout point de la surface externe de celle-ci, par une barrière en un polymère adhésif thermoplastique, apte à assurer une bonne liaison entre l'armature et le matériau polymère qui recouvre l'ensemble, caractérisé en ce que le polymère thermoplastique adhésif appartient à la famille des polyoléfines greffées acryliques ou maléiques, ou acryliques/maléiques.

L'épaisseur de la couche du polymère adhésif thermoplastique sera habituellement comprise entre 20 et 200 µm
De préférence, on utilisera un polymère adhésif thermoplastique apte à être extrudé en ligne avec le matériau polymère du profilé, dans les conditions de gainage de l'armature métallique.

Il sera ainsi possible d'effectuer quasi-simultanément le gainage de l'armature par extrusions successives de l'agent adhésif et du matériau thermoplastique constitutif du profilé.

Cette opération pourra ainsi être effectuée par coextrusion sur l'armature de la barrière adhésive et du matériau thermoplastique à partir d'une même extrudeuse.

L'invention a par conséquent également pour objet un procédé de fabrication d'un profilé en un matériau polymère gainant une armature métallique, prédécoupée à la largeur désirée pour le profilé, à l'aide d'un polymère adhésif thermoplastique, et l'on revêt l'armature ainsi protégée du matériau polymère, vulcanisable ou thermoplastique, constituant ce profilé, caractérisé en ce que le polymère thermoplastique adhésif appartient à la famille des polyoléfines greffées acryliques ou maléiques, ou acryliques/maléiques

Comme indiqué ci-dessus, le polymère adhésif thermoplastique et le polymère constituant ce profilé seront extrudés en ligne sur l'armature métallique du profilé.

De préférence, ils seront coextrudés à partir d'une même extrudeuse à têtes d'extrusion multiples.

La barrière polymère thermoplastique adhésive appartient, par conséquent, à la famille des polyoléfines greffées acryliques ou maléiques, ou acryliques/maléiques, qui présentent une bonne adhérence, tant vis-à-vis des métaux, notamment de l'aluminium ou de l'acier, que vis-à-vis polymères, des caoutchoucs et notamment des E.P. et E.P.D.M., tout en étant imperméables à l'eau et aptes à supporter des températures pouvant dépasser 90°C.

De telles polyoléfines greffées sont commercialisées notamment sous les appellations LOTADER, par la Société ATOCHEM, ou PLEXAR, par la Société D.S.M.

Les profilés ainsi réalisés par extrusion sont ensuite découpés aux longueurs désirées, de sorte que seules les sections transversales des extrémités - mais elles seules - ne sont pas gainées par l'agent adhésif. Ces extrémités peuvent toutefois être aisément protégées par surmoulage avec le même matériau adhésif thermoplastique que celui qui sépare l'armature métallique du matériau polymère vulcanisable ou thermoplastique contenant le profilé, ou par laquage.

Les profilés conformes à l'invention présentent une résistance parfaite à la corrosion galvanique, comme le montrent notamment les essais dans les conditions prescrites par les principaux constructeurs automobiles, où ils résistent à vingt cycles climatiques répétés.

L'invention est illustrée plus en détail par les dessins annexés, sur lesquels :
La figure 1 est une coupe transversale d'un profilé armé de la technique antérieure ;
La figure 2 est une coupe transversale d'un profilé armé conforme à l'invention ;
Les figures 3, 4 et 5 illustrent diverses formes de mise en oeuvre du procédé de fabrication du profilé conforme à l'invention.

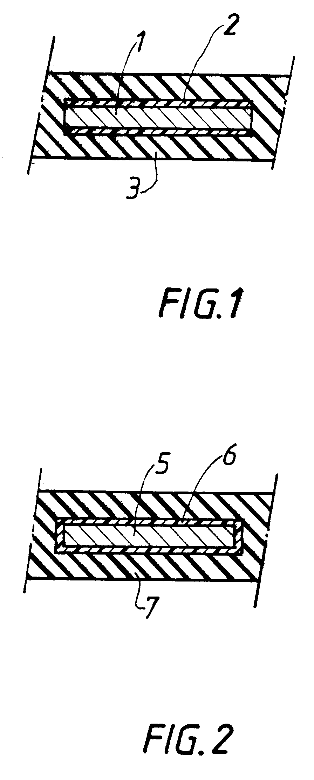

Comme expliqué ci-dessus et comme représenté sur la figure 1, dans les profilés à armature métallique pleine de la technique antérieure, l'armature 1 est découpée à la largeur désirée à partir d'un bobine d'un feuillard qui a été préalablement gainé sur ses deux faces d'un adhésif 2, tel que ceux commercialisés sous les appellations CHEMLOC ou CHEMOSYL. Il en résulte que les tranches de l'armature 1 sont mises à nu lors de l'opération de découpe et qu'en ces emplacements, l'armature est en contact direct avec le matériau vulcanisable ou thermoplastique 3 dont on gaine ensuite l'armature 1, avec pour conséquence un risque sérieux de corrosion galvanique de l'armature au contact des composés et charges conductrices présents dans le polymère 3.

Au contraire, dans le cas du profilé conforme à l'invention, l'armature 5, préalablement découpée à la largeur désirée pour le profilé, n'est gainée qu'ensuite d'une barrière polymère adhésive 6, qui la sépare en tout point du polymère 7, vulcanisable ou thermoplastique, dont elle est ensuite revêtue. On élimine ainsi les risques de corrosion galvanique de l'armature 5 au contact des composés présents dans le polymère 7.

Le polymère adhésif thermoplastique, choisi dans la famille des polyoléfines greffées acryliques ou maléiques, ou acryliques/maléiques, et le polymère constituant le profilé seront de préférence extrudés sur l'armature.

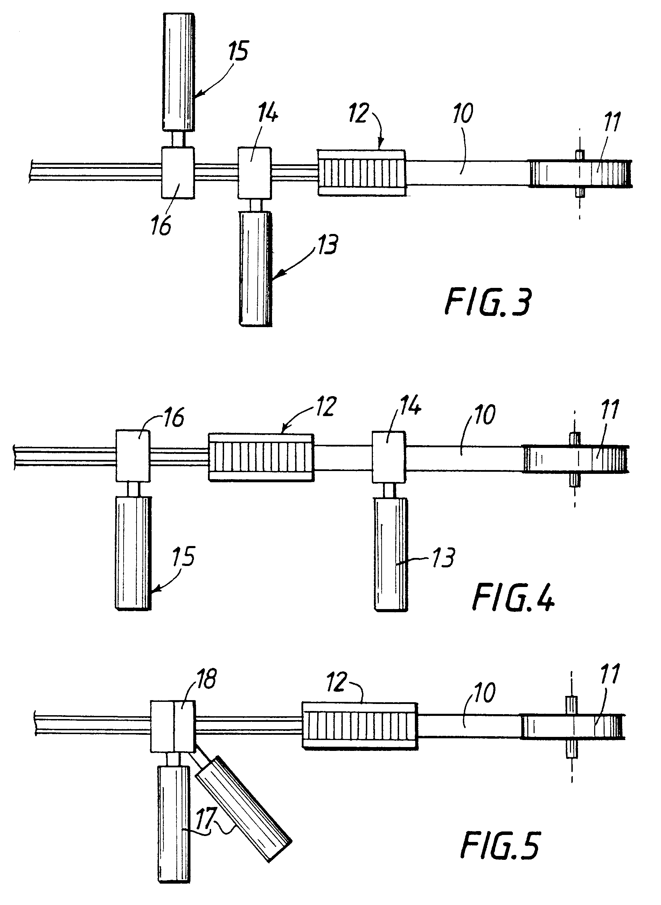

La figure 3 illustre un premier procédé de fabrication du profilé, selon lequel l'armature 10, déroulée à partir d'une bobine 11, est d'abord mise à la forme désirée par passage dans une formeuse à galets 12. Elle est traitée ensuite par une première boudineuse 13 à tête d'équerre 14, par laquelle elle est gainée de la barrière polymère adhésive et thermoplastique, puis par une seconde boudineuse 15 à tête d'équerre 16, qui extrude le polymère constitutif du profilé sur l'armature ainsi gainée de la barrière polymère adhésive.

Dans la variante de la figure 4, où les organes déjà décrits sont désignés par les mêmes signes de référence, la bande nue 10 est d'abord gainée de la barrière polymère adhésive et thermoplastique, par la tête 14 de la boudineuse 13, avant d'être conformée par la formeuse à galets 12 et d'être ensuite revêtue de polymère par la tête 16 de la boudineuse 15.

Enfin, dans la forme de mise en oeuvre la plus simple du procédé conforme à l'invention, la bande nue 10, après avoir été mise en forme par la formeuse à galets 12, est traitée par les boudineuses 17 à une tête multiple 18, qui co-extrude successivement la barrière polymère adhésive thermoplastique, puis le polymère constitutif du profilé.

Toutes ces opérations de fabrication sont usuelles dans la technique et ne posent aucun problème à l'homme de l'art.

## Revendications

1. Profilé en un matériau polymère (7), vulcanisable ou thermoplastique, à armature métallique(5), à résistance à la corrosion améliorée, le matériau polymère (7) étant séparé de façon étanche de l'armature métallique (5), en tout point de la surface externe de celle-ci, par une barrière en un polymère adhésif thermoplastique (6), apte à assurer une bonne liaison entre l'armature et le matériau polymère (7) qui recouvre l'ensemble, caractérisé en ce que le polymère thermoplastique adhésif (6) appartient à la famille des polyoléfines greffées acryliques ou maléiques, ou acryliques/maléiques.

2. Profilé selon la revendication 1, caractérisé en ce que la barrière de polymère adhésif thermoplastique (6) a une épaisseur comprise entre 20 et 200 µm .

3. Procédé de fabrication d'un profilé en un matériau polymère (7) gainant une armature métallique (5), selon lequel on gaine l'armature métallique (5), prédécoupée à la largeur désirée pour le profilé, à l'aide d'un polymère adhésif thermoplastique (6) et l'on revêt l'armature ainsi protégée du matériau polymère (7), vulcanisable ou thermoplastique, constituant le profilé, caractérisé en ce que le polymère thermoplastique adhésif (6) appartient à la famille des polyoléfines greffées acryliques ou maléiques, ou acryliques/maléiques.

4. Procédé selon la revendication 3, caractérisé en ce que la barrière de polymère adhésif thermoplastique (6) et le matériau polymère (7) sont coextrudés à partir d'une même extrudeuse à têtes d'extrusion multiples.

5. Procédé selon la revendication 3, caractérisé en ce que la barrière de polymère adhésif thermoplastique (6) et le matériau polymère (7) sont extrudés en ligne sur l'armature métallique.
